(19) Europäisches Patentamt
European Patent Office
Office européen des brevets

(11) Publication number: 0 091 117 A1

(12) EUROPEAN PATENT APPLICATION

(21) Application number: 83103299.0

(22) Date of filing: 05.04.83

(51) Int. Cl.³: C 08 L 79/08
C 08 L 81/06

(30) Priority: 02.04.82 US 364912

(43) Date of publication of application: 12.10.83 Bulletin 83/41

(84) Designated Contracting States: DE FR GB IT NL

(71) Applicant: GENERAL ELECTRIC COMPANY
1 River Road
Schenectady New York 12305(US)

(72) Inventor: White, Dwain Montgomery
2334 St.Joseph Drive
Schenectady New York 12309(US)

(72) Inventor: Giles, Harold Frazee, Jr.
Wilshire Drive
Cheshire Massachusetts 01225(US)

(72) Inventor: Matthews, Robert Owen
5047 Picard Road
Voorheesville New York 12186(US)

(74) Representative: Schüler, Horst, Dr. European Patent Attorney et al,
Kaiserstrasse 41
D-6000 Frankfurt/Main 1(DE)

# (54) Polyetherimide-polysulfone blends.

(57) Disclosed are blends of (a) a polyetherimide and (b) a polysulfone. Such blends have good flexural and tensile properties and have a higher impact strength than those associated with the polyetherimide component of the blends. In addition, some of the blends are translucent or transparent and/or exhibit a single glass transition temperature.

EP 0 091 117 A1

Croydon Printing Company Ltd.

POLYETHERIMIDE-POLYSULFONE BLENDS



This invention relates to a class of polyetherimide-polysulfone blends. The blends have good flexural and tensile properties and have a higher impact strength than those associated with the polyetherimide components of the blends. In addition, the blends generally are translucent or transparent and may exhibit a single glass transition temperature.

The blends of the invention include a polyetherimide of the formula:

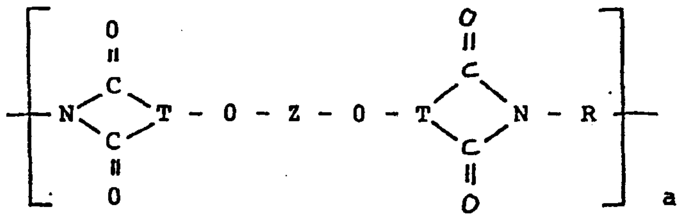

where a represents a whole number in excess of 1, e.g., 10 to 10,000 or more, the group -O-T< is selected from:

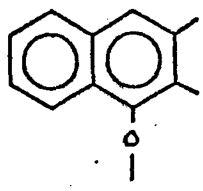

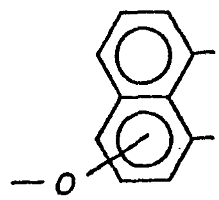

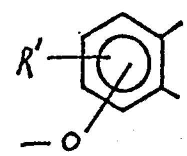

R' being hydrogen, lower alkyl or lower alkoxy, preferably the polyetherimide includes the latter -O-T< group where R' is hydrogen such that the polyetherimide is of the formula:

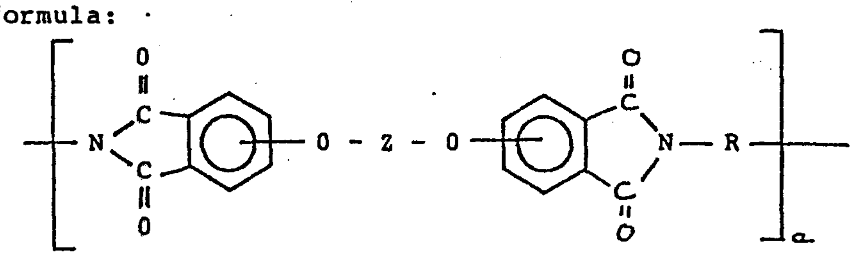

and the divalent bonds of the -O-Z-O- radical are in the 3,3'; 3,4'; 4,3' or the 4,4' position;

Z is a member of the class consisting of (1) 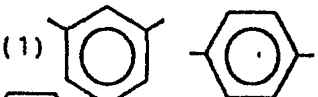

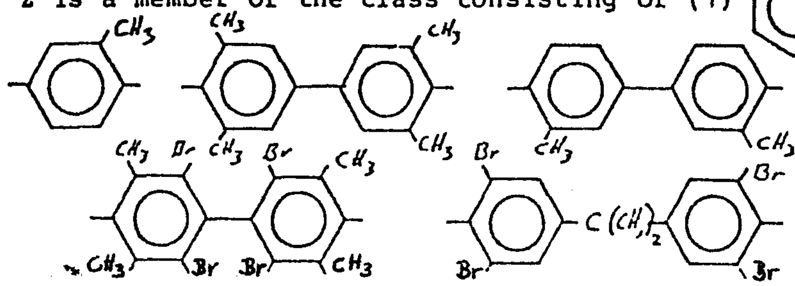

and (2) divalent organic radicals of the general formula:

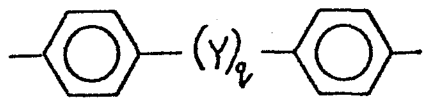

where Y is a member selected from the class consisting of divalent radicals of the formulas,

$$-C_yH_{2y}-,\ -\overset{O}{\overset{\|}{C}}-,\ -\underset{\underset{O}{\|}}{\overset{O}{\overset{\|}{S}}}-,\ -O-\text{ and }-S-,$$

where q is 0 or 1, y is a whole number from 1 to 5, and R is a divalent organic radical selected from the class consisting of (1) aromatic hydrocarbon radicals having from 6-20 carbon atoms and halogenated derivatives thereof, (2) alkylene radicals and cycloalkylene radicals having from 2-20 carbon atoms, $C_{(2-8)}$ alkylene terminated polydiorganosiloxane, and (3) divalent radicals included by the formula

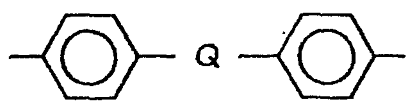

where Q is a member selected from the class consisting of

$$-O-,\ -\overset{O}{\overset{\|}{C}}-,\ -\underset{\underset{O}{\|}}{\overset{O}{\overset{\|}{S}}}-,\ -S-\text{ and }-C_xH_{2x}$$

where x is a whole number from 1 to 5 inclusive. Particularly preferred polyetherimides for the purposes of the present invention include those where -O-T< and Z respectively are:

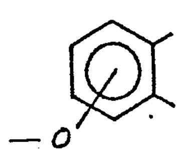

and

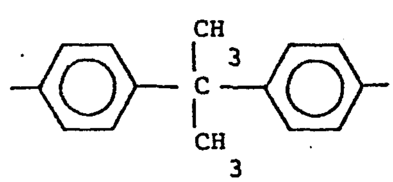

and R is selected from:

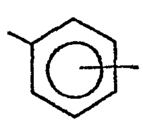

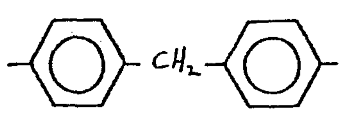

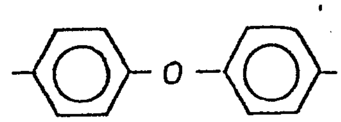

The polyetherimides where R is metaphenylene are most preferred.

Polysulfones for use in the blends of the present invention include polymeric compounds which have a $-SO_2-$ connecting link between two aryl nuclei. Such polysulfones generally have a weight-average molecular weight of about 10,000 to about 60,000, preferably of about 15,000 to about 50,000 and especially of about 20,000 to about 40,000. The aryl nuclei of such polysulfones can be mononuclear, dinuclear, trinuclear or tetranuclear, and the nuclei can be bonded via fusion, a single bond on a bridge member and preferably contain between 6 and 24 carbon atoms, in particular between 6 and 12 and very particularly, 6 carbon atoms. The aryl nuclei can carry additional substituents, such as for example $C_1$-$C_6$ alkyl or halogen such as chlorine or bromine. The polysulfones which can be used in the invention can be either linear or branched and they can be employed alone or as mixtures.

The polysulfones which can be used according to the invention can preferably be characterized by the following structural formula;

$$-\!\!\left(A-SO_2-A-B\right)\!\!-_b$$

wherein A and B are the above-mentioned aryl nuclei; or B is either a single bond or also $-SO_2-$; and b is the degree of polymerization, which is generally a positive integer in excess of 5.

Particularly preferred polysulfones of the above formula include those where A and optionally B are selected from the following divalent aromatic radicals:

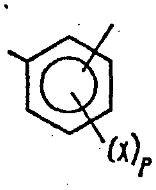 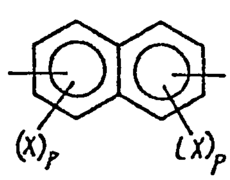 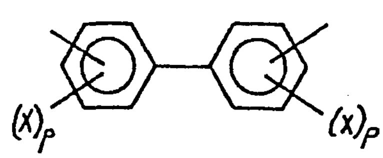

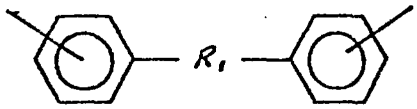

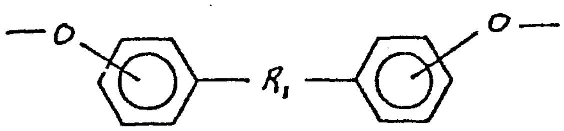

where $R_1$ is a $C_1$-$C_{12}$ alkylene, preferably $C_1$-$C_6$; $C_2$-$C_{12}$-alkylidene; $C_5$-$C_{12}$-cycloalkylene; $C_5$-$C_{12}$-cycloalkylidene; $C_7$-$C_{12}$aralkylene; $C_7$-$C_{12}$-aralkylidene; or a $C_8$-$C_{12}$-arylene-bis-alkylidene radical, one of the groupings -O-, -S-, -SO-, or -CO- or

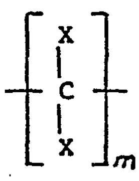

or

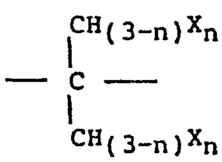

where X is halogen such a fluorine, chlorine or bromine, p is 0 or an integer from 1 to 4, m is a positive integer from 1 to 6 and n is an integer from 1 to 3.

Particularly preferred polysulfones include those of the formula;

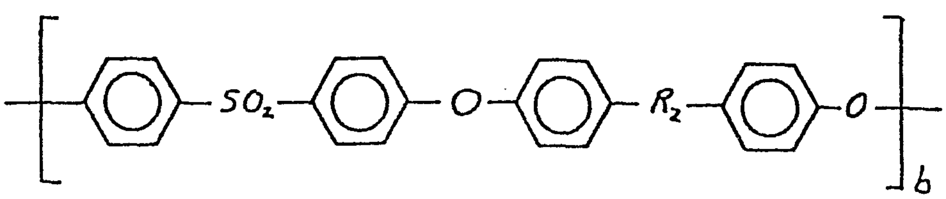

where $R_2$ is $C_1$-$C_6$ alkylene, especially where $R_2$ is dimethyl methylene which is a polysulfone sold under the tradename Udel by Union Carbide Corp. and those polysulfones where A is phenyl and B is -O- or a single bond such as;

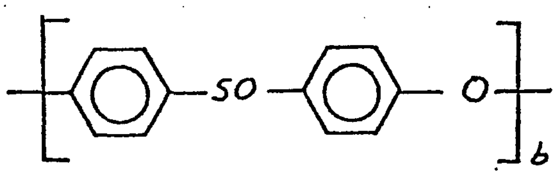

and

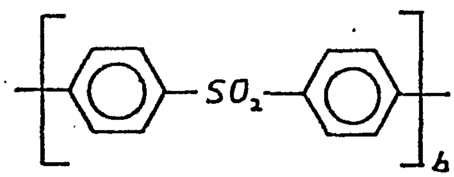

The latter two polysulfones are also available commercially.

The polyetherimides can be obtained by any of the methods well known to those skilled in the art including the reaction of any aromatic bis(ether anhydrides) of the formula

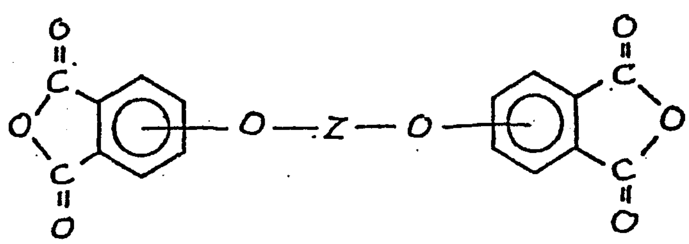

where Z is as defined hereinbefore with an organic diamine of the formula

$$H_2N\text{-}R\text{-}NH_2$$

where R is as defined hereinbefore.

Aromatic bis(ether anyhdride)s of the above formula include, for example, 2,2-bis[4-(2,3-dicarboxyphenoxy)phenyl]-propane dianhydride; 4,4'-bis(2, 3-dicarboxyphenoxy)diphenyl ether dianhydride; 1,3-bis(2, 3-dicarboxyphenoxy)benzene dianhydride; 4,4'-bis(2,3-dicarboxyphenoxy)diphenyl sulfide dianhydride; 1,4-bis(2, 3-dicarboxyphenoxy)benzene dianhydride; 4,4'-bis(2,3-dicarboxyphenoxy) benzophenone dianhydride; 4,4'-bis(2,3-dicarboxyphenoxy)diphenyl sulfone dianhydride; 2,2-bis[4-(3,4-dicarboxyphenoxy)phenyl]propane dianhydride; 4,4'-bis(3,4-dicarboxyphenoxy)diphenyl ether dianhydride; 4,4'-bis(3,4-dicarboxyphenoxy)diphenyl sulfide dianhydride; 1,3-bis(3,4-dicarboxyphenoxy)benezene dianhydride; 1,4-bis (3,4-dicarboxyphenoxy)benzene dianhydride; 4,4'-bis(3,4-dicarboxyphenoxy)benzophenone dianhydride; 4-(2,3-dicarboxyphenoxy)-4'-(3,4-dicarboxyphenoxy)diphenyl -2,2-propane dianhydride; etc. and mixtures of such dianhydrides.

In addition, aromatic bis(ether anhydride)s also included in the above formula are shown by Koton, M.M.; Florinski, F.S.; Bessonov, M.I.; Rudakov, A.P. (Institute of Heteroorganic compounds, Academy of Sciences, U.S.S.R.), U.S.S.R. 257,010, Nov. 11, 1969, Appl. May 3, 1967. In addition, dianhydrides are shown by M.M. Koton, F.S. Florinski, Zh Org. Khin, 4(5), 774 (1968).

Organic diamines of the above formula include, for example, m-phenylenediamine, p-phenylenediamine, 4,4'-diaminodiphenylpropane, 4,4'-diaminodiphenylmethane, benzidine, 4,4'-diaminodiphenyl sulfide, 4,4'-diaminodiphenyl sulfone, 4,4'-diaminodiphyenyl ether, 1,5-diaminonaphthalene, 3,3'-dimenthylbenzidine, 3,3'-dimethoxybenzidine, 2,4-bis(β-amino-t-butyl)toluene, bis(p-β-amino-t-butylphenyl)ether, bis(p-β-methyl-o-aminopentyl)benzene, 1,3-diamino-4-isopropylbenzene, 1,2-bis(3-aminopropoxy)ethane, m-xylylenediamine, p-xylylenediamine, 2,4-diaminotoluene, 2,6-diaminotoluene, bis(4-aminocyclohexyl)methane, 3-methylheptamethylenediamine, 4,4-dimethylheptamethylenediamine, 2,11-dodecanediamine, 2,2-

dimethylopropylenediamine, octamethylenediamine, 3-methoxyhexamethylenediamine, 2,5-dimethylhexamethylenediamine, 2,5-dimethylheptamethylenediamine, 3-methylheptamethylenediamine, 5-methylnonamethylendediamine, 1,4-cyclohexanediamine, 1,12-octadecanediamine, bis(3-aminopropyl)sulfide, N-methyl-bis (3-aminopropyl)amine, hexamethylenediame, heptamethylenediamine, nonamethylenediamine, decamethylenediamine, bis(3-aminopropyl) tetramethyldisiloxane, bis(4-aminobutyl) tetramethyldisiloxane, etc.

In general, the reactions can be advantageously carried out employing well-kown solvents, e.g., o-dichlorobenzene, m-cresol/toluene, etc. in which to effect interaction between the dianhydrides and the diamines, at temperatures of from about 100 to about 250°C. Alternatively, the polyetherimides can be prepared by melt polymerization of any of the above dianhydrides with any of the above diamino compounds while heating the mixture of the ingredients at elevated temperatures with concurrent intermixing. Generally, melt polymerization temperatures between about 200° to 400°C. and preferably 230° to 300°C. can be employed. The conditions of the reaction and the proportions of ingredients can be varied widely depending on the desired molecular weight, intrinsic viscosity, and solvent resistance. In general, equimolar amounts of diamine and dianhydride are employed for high molecular weight polyetherimides, however, in certain instances, a slight molar excess (about 1 to 5 mol percent) of diamine can be employed resulting in the production of polyetherimides having terminal amine groups. Generally, useful polyetherimides have an intrinsic viscosity [$\eta$] greater than 0.2 deciliters per gram, preferably 0.35 to 0.60, or 0.7 deciliters per gram or even higher when measured in m-cresol at 25°C.

Included among the many methods of making the polyetherimides are those disclosed in U.S. Pat. Nos. Heath et al, 3,847,867, Williams 3,847,869, Takekoshi et al. 3,850,885, White 3,852,242 and 3,855,178, etc. These disclosures are incorporated herein in their entirety by reference for the purpose of teaching, by way of illustration, general and specific methods for preparing polyetherimides suitable for the blends of this invention.

The polysulfone resins used in the blends of this invention are prepared by any of the techniques well known in the art. The following patents illustrate methods for preparing these polysulfone resins: Robinson et al. U.S. Pat. Nos. 3,264,536, issued Aug. 2, 1966; Vogel, 3,321,449, issued May 23, 1967; D'Alesandro, 3,355,272, issued Nov. 28, 1967; British Pat. No. 1,122,192, published July 31, 1968 as well as U.S. Pat Nos. 3,532,670; 3,634,354; 3647,751; 3,729,527 and 3,960,815, all incorporated herein by reference. The following articles also show the preparation of these polysulfone resins and are incorporated herein by reference: Johnson et al. "Poly(Aryl Ethers) by Nucleophilic Aromatic Substitution 1. Synthesis and Properties" J. of Polymer Science, Part A-1,5, (9)2375-98 (1967); Jennings et al., "Synthesis of Poly(Arylene Sulfones) and Poly(Arylene Ketones) by Reactions Involving Substitution of Aromtic Nuclei" J. of Polymer Science, Part C, No. 16 (Part 2) 715-24 (1967) and Hale et al. "Thermal Stability of Polyaryl Ethers Prepared by Aromatic Nucleophilic Substitution" Amer. Chem. Soc., Div. of Polymer Chem. Reprints 7 (2) 503-12.

In accordance with the present invention, useful blends of a polyetherimide and a polysulfone are generally obtainable in all proportions of the two polymers relative to each other. Consequently, blends comprising from about 1 to about 99%, by weight, polyetherimide and from about 99 to about 1%, by weight polysulfone are included within the scope of the invention. By controlling the proportions of the polyetherimide and polysulfone relative to each other,

blends having certain predetermined properties which are improved over those of either the polyetherimide and/or the polysulfone component alone may be readily obtained. In general, blends of polyetherimides and polysulfones have good flexural and tensile properties and have an improved impact strength over the polyetherimide component of the blends.

It is contemplated that the polyetherimide-polysulfone blends of the present invention may also include additive materials such as fillers, stabilizers, plasticizers, flexibilizers, surfactant agents, pigments, dyes, reinforcements, flame retardants and diluents in conventional amounts. It is also contemplated that the blends of the invention may include two or more polyetherimides with one or more polysulfones or two or more polysulfones in combination with one or more polyetherimides.

Methods for forming polyetherimide- polysulfone blends may vary considerably. Prior art blending techniques are generally satisfactory. A preferred method comprises blending the polymers and additives such as reinforcements in powder, granular or filamentous form, extruding the blend, and chopping the extrudate into pellets suitable for molding by means conventionally used to mold normally solid thermoplastic compositions.

The polyetherimide-polysulfone blends of the present invention have application in a wide variety of physical shapes and forms, including the use as films, molding compounds, coatings, etc. When used as films or when made into molded products, these blends, including laminated products prepared therefrom, not only possess good physical properties at room temperature but they retain their strength and excellent response to workloading at elevated temperatures for long periods of time. Films formed from the blends of this invention may be used in application where films have been used previously. Thus, the blends of the recent invention can be used in

automobile and aviation applications for decorative and protective purposes, and as high temperature electrical insulation for motor slot liners, transformers, dielectric capacitors, coil and cable wrappings (form wound coil insulation for motors), and for containers and container linings. The blends can also be used in laminated structures where films or solutions of the blend are applied to various heat-resistant or other type of materials such as asbestos, mica, glass fiber and the like, the sheets superimposed one upon the other, and thereafter subjecting the sheets to elevated temperatures and pressures to effect flow and cure of the resionous binder to yield cohesive laminated structures. Films made from the subject polyetherimide-polysulfone blends can also serve in printed circuit applications.

Alternatively, solutions of the blends herein described can be coated on electrical conductors such as copper, aluminum, etc. and thereafter the coated conductor can be heated at elevated tempratures to remove the solvent and provide a continuous resinous composition thereon. If desired, an additional overcoat may be applied to such insulated conductors including the use of polymeric coatings such as polyamides, polyesters, silicones, polyvinylformal resins, epoxy resins, polyimides, polytetrafluoroethylene, etc. The use of the blends of the present invention as overcoats on other types of insulation is not precluded.

Other applications which are contemplated for these blends include their use as binders for asbestos fibers, carbon fibers, and other fibrous materials in making brake linings. In addition, molding compositions and molded articles may be formed from the polymeric blends of the invention preferably by incorporating such fillers as asbestos, glass fibers, talc, quartz, powder, finely divided carbon, silica and the like into the blends prior to molding. Shaped articles may be formed under heat, or

under heat and pressure, in accordance with practices well-known in the art.

The following examples illustrate specific polyetherimide-polysulfone blends in accordance with the present invention. It should be understood that the examples are given for the purpose of illustration and do not limit the invention. In the examples, all parts and percentages are by weight unless otherwise specified.

EXAMPLE I

Cast and compressed films of several polyetherimide-polysulfone blends according to the invention were prepared and examined for compatability.

The polyetherimide of the blend was prepared from the reaction product of essentially equimolar amounts of 2,2 -bis[4-(3,4-dicarboxyphenoxy) phenyl] propane dianhydride and m-phenylene diamine and had the structural formula:

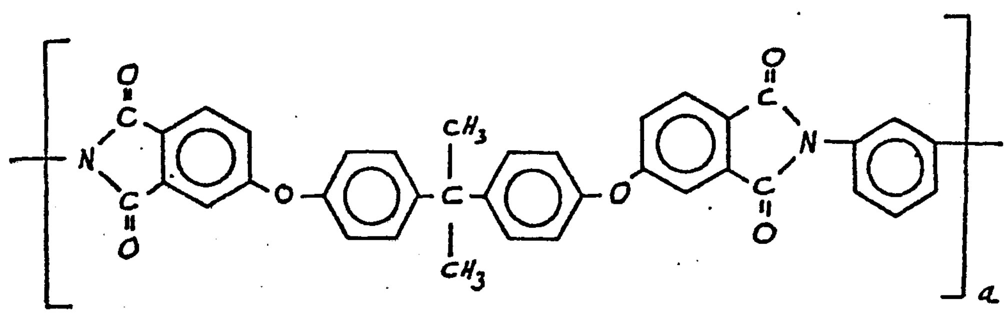

The polysulfones used in preparing the blends were (a) a polyethersulfone (hereinafter PES) of the structural formula:

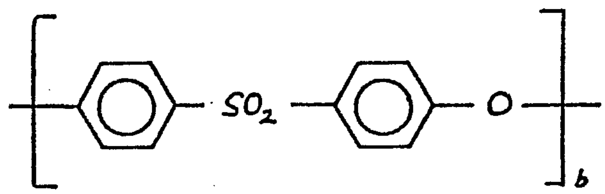

and (b) a polysulfone (hereinafter PS) sold commercially by Union Carbide Corporation having the structural formula:

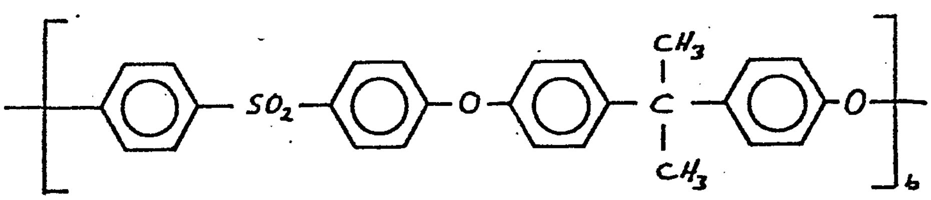

Blends of the polyetherimide and the polysulfones were assessed for compatibility by (a) combining solutions of each polymer to detect cloudiness which can be indicative of incompatibility, (b) compression molding a dried coprecipitated polymer mixture so as to determine homogeneity in the pressed sample, (c) solution casting a polymer mixture onto a plate and drying to produce a film so as to determine homogeneity, and (d) subjecting the blend to differential scanning calorimetry (DSC).

Specifically, solutions of each polymer of the blend were prepared by dissolving about 10% by weight of the polymer in 90% by weight of dimethyl formamide (DMF) or chloroform ($CHCl_3$). The solutions were then combined and any cloudiness noted. The contained polymer blend was then precipitated by the addition of methanol or by spreading the polymers in DMF on glass plates and then drying in an oven at about 100°C to allow the solvent to evaporate at a controlled rate. The precipitated polymer blend in the form of a film was then dried overnight under vacuum. The dried blend was

compression molded between aluminum plates for about one minute at about 5000 psig and at about 275°-300°C.

The above procedure was utilized to prepare blends containing either about 50% or about 25% polyetherimide with each of the above mentioned polysulfones. A tabulation of the assessments of the blends is set forth in Table I.

Table I

| | | | | |
|---|---|---|---|---|
| Polysulfone type | PES | PES | PS | PS |
| % polyetherimide | 50 | 25 | 50 | 25 |
| Solvent for blending | DMF | DMF | $CHCl_3$ | $CHCl_3$ |
| Appearance of: Pressed film | Almost clear | Clear | Hazy | Slightly hazy |
| Solution-cast film | Almost clear | | | |
| Combined solutions | Hazy | Hazy | Almost clear | Clear |
| DSC Measurements: $T_{g\,(low)}$ | 213 | ---[a] | 184 | 181 |
| $T_{g\,(low)}$ | 227 | 218 | 212 | 208[b] |

(a) Only one transition was detected.

(b) This transition was weak and was not clearly distinguished until the third and fourth heating cycle.

From the above results, it can be noted that the clarity of the blends, particularly the blend containing PS, is better when there is a predominance of one component. Further, the 50:50 blend containing PES is considerably clearer than the 50:50 blend containing PS which seems to indicate that the smaller aliphatic content of PES may contribute greater compatibility with the polyetherimide in the blend.

EXAMPLE II

A polyetherimide-polysulfone blend according to the invention was prepared, the blend molded into test specimens and the specimens tested for various physical properties.

The polyetherimide for the blend was prepared from the reaction product of essentially equimolar amounts of 2,2-bis[4-(3,4-dicarboxyphenoxy) phenyl] propane dianhydride and m-phenylene diamine produced at elevated temperature of about 250° to about 300°C. and under nitrogen atmosphere. The polymer was extruded at about 300°C. to form a strand and then mechanically chopped into pellets. A specimen molded from the pellets was tested for various properties and the results are set out at the top of Table II.

About 99 parts of the above polyetherimide were mixed with about one part of a polysulfone sold commercially under the trade name UDEL P1700 by Union Carbide Corporation. This polysulfone by itself had the physical properties as set forth at the bottom of Table II. The blend of the two polymers were then extruded in a 28 mm Werner & Pfleiderer extruder having a temperature profile varying from about 610 to 650°F and a die temperature of about 610°F. The resulting extrudate was comminuted into pellets and the pellets injection molded into test specimens in a Newbury molding machine at a temperature of about 610°F. The impact strength of these specimens was

measured according to the unnotched and notched Izod test, and the results are set forth in Table II. The heat distortion temperature, flexural properties, tensile properties and Gardner impact strength were also measured and are given in Table II.

The above procedure in forming a polyetherimide-polysulfone blend of the invention was then repeated to produce test specimens of a series of blends containing varying amounts of polyetherimide relative to the amount of the polysulfone. The only exceptions to the procedure being that the blend containing about 50% polyetherimide was extruded with an extruder temperature profile of about 590° to 625°F. and with a die temperature of about 590°F., the blend containing 30% polyetherimide was extruded with an extruder temperature profile of about 610° to 640°F. and with a die temperature of 630°F., and the blend containing 10% polyetherimide was extruded with an extruder temperature profile of about 610° to 630°F. and a die temperature of about 620°F. The results of the unnotched and notched Izod impact test, as well as the heat distortion temperature, flexural and tensile properties and Gardner impact strength for these blends are also detailed in Table II. The blends were transparent at low concentrations of polysulfone, e.g., about 10% or less, were translucent at high concentations of polysulfone, e.g., about 90% or more, and were opaque at concentrations in between about 10 and 90% polysulfone.

Table II

| % Polyetherimide | Izod Impact (ft-lb/in) notched[1] | Izod Impact (ft-lb/in) unnotched | Heat Distortion Temperature (°C @ 264 psi) | Gardner Impact[2] (in-lbs) | Flexural Properties: Initial Modulus ($psi \times 10^5$) | Flexural Properties: Stress @ 5% Strain ($psi \times 10^4$) | Flexural Properties: Ultimate Strength ($psi \times 10^4$) | Tensile Properties: Yield (%) | Tensile Properties: Yield ($psi \times 10^4$) | Tensile Properties: Failure[3] (%) | Tensile Properties: Failure (psix10) |
|---|---|---|---|---|---|---|---|---|---|---|---|
| 100 | 1.1 | 26.5 | 186 | 115 | 5.02 | 2.10 | 2.51 | 18 | 1.54 | 36 | 1.25 |
| 99 | 0.9 | 21.1 | — | 45 | — | — | — | — | — | — | ---- |
| 95 | 0.9 | 21.3 | — | 47 | — | — | — | — | — | — | ---- |
| 90 | 0.7 | NB* | 179 | 249 | 4.44 | 1.85 | 2.23 | 15 | 1.40 | 70 | 1.10 |
| 70 | 0.9 | NB | 171 | 306 | 4.34 | 1.76 | 2.09 | 14 | 0.68 | 104 | 0.59 |
| 50 | 0.8 | NB | 166 | >320 | 4.61 | 1.89 | 2.14 | 13 | 1.20 | 75 | 0.98 |
| 30 | 1.0 | NB | 165 | >320 | 4.70 | 1.89 | 2.05 | 12 | 1.11 | 120 | 0.95 |
| 10 | 0.7 | NB | 165 | >320 | 3.86 | 1.55 | 2.72 | 12 | 1.05 | 129 | 0.84 |
| 0 | 1.1 | NB | 160 | >320 | 4.03 | 1.54 | 1.68 | 11 | 1.04 | 200 | 0.89 |

*not broken
1. 0.125 in. bar
2. 0.125 in. plaque and 0.625 tup
3. Obtained by dividing the effective gauge length by the total extension of a Type I tensile bar.

As is evident from the above experimental results, blends of the polyetherimide and the polysulfone have an improved impact strength over the polyetherimide component alone as evidenced by the unnotched Izod and Gardner impact values, particularly when the blend contains over 50% polysulfone, while exhibiting good tensile, flexural and heat distortion properties.

More specifically, the blends exhibited an unnotched Izod impact strength which improves dramatically with increasing concentration of polysulfone as evidenced by the test specimens containing in excess of 10% polysulfone being deformed, rather than broken, by impact of the hammer in the Izod test. Similarly, the Gardner impact strength of the blends was in excess of 320 in-lbs when the concentration of polysulfone was about 50% or greater. In addition, the notched Izod values for the blends, within experimental error, do not vary appreciably within the range of concentrations tested. The heat distortion temperature data of the blends, when plotted, increases on a smooth nonlinear curve with increasing polyetherimide concentration as do the tensile, yield and failure strengths.

Example III

A polyetherimide-polyphenyl sulfone blend according to the invention was prepared, the blend molded into test specimens and the test specimens tested for various physical properties.

About 99 parts of a polyetherimide made in accordance with the procedure of Example II and having the physical properties set forth in Table III were mixed with about one part of a polyphenylsulfone sold commercially under the trade name Radel R-5000 by Union Carbide Corporation. This

polyphenylsulfone by itself had the physical properties set forth at the bottom of Table III. The mixture of the two polymer was then extruded in a Werner & Pfleiderer extruder having a temperature profile varying from about 600 to 650°F and a die temperature of about 630°F. The resulting extrudate was comminuted into pellets and the pellets injection molded at about 650°F. to 675°F. into test specimens. Impact strengths of these specimens were measured according to the unnotched and notched Izod test and the results are set forth in Table III. The heat distortion temperature, glass transition temperature, flexural properties, and tensile properties of the test specimens of the blend were also measured and are given in Table III.

The above procedure in forming a polyetherimide-polyphenylsulfone blend according the invention was then repeated to produce test specimens of a series of blends containing varying amounts of polyetherimide relative to the amount of polyphenylsulfone. The results of the unnotched and notched Izod impact test, as well as the heat distortion temperature glass transition temperature flexural properties, and tensile properties for test specimens of the blends are also detailed in Table III.

- 2c -

## Table III

| % Polyetherimide | Izod Impact[1] Notched ft lb/in | Izod Impact[1] Unnotched ft lb/in | HDT 2°C @1.82 MPa | Tg °C | Tensile Properties[3] Yield % | Tensile Properties[3] Yield MPa | Tensile Properties[3] Failure % | Tensile Properties[3] Failure MPa | Flexural Properties[4] Initial Modulus GPa | Flexural Properties[4] Strength @ 6.2 mm Deflection MPa | Flexural Properties[4] Ultimate Strength MPa |
|---|---|---|---|---|---|---|---|---|---|---|---|
| 100 | 1.08 | 26.5 | 186 | 218 | 18 | 106 | 36 | 84.8 | 3.46 | 145 | 173 |
| 99 | 0.75 | 27.7 | 187 | — | 17 | 104 | 38 | 84.1 | 3.48 | 143 | 170 |
| 95 | 0.62 | 31.2 | 189 | — | 17 | 103 | 66 | 84.8 | 3.56 | 139 | 168 |
| 90 | 0.65 | NB* | 184 | — | 17 | 104 | 59 | 84.8 | 3.35 | 139 | 165 |
| 70 | 1.04 | NB | 186 | 219 | 17 | 98.6 | 69 | 82.1 | 3.06 | 131 | 153 |
| 50 | 0.87 | NB | 192 | 224 | 17 | 91.7 | 80 | 77.9 | 2.97 | 123 | 147 |
| 30 | 0.84 | NB | 193 | 221 | 17 | 83.4 | 89 | 71.7 | 2.80 | 111 | 132 |
| 10 | 2.35 | NB | 188 | — | 18 | 75.8 | 87 | 66.8 | 2.57 | 103 | 122 |
| 0 | 8.25 | NB | 191 | 225 | 18 | 71.0 | 142 | 70.3 | 2.51 | 97.2 | 116 |

1. Tested according to ASTM method D256 using a 2.3 mm bar. Unnotched bar has a notch on the back side.
2. Tested according to ASTM method D648 using a 3.2mm bar.
3. Tested according to ASTM method D638 using a Type I bar with a 5.08mm/min crosshead speed.
4. Tested according to ASTM method D790 using a 3.2mm bar at a 1.27mm/min crosshead speed.

* No break

As is apparent from the above test results, the blends of the invention have improved tensile and flexural properties over that of the polyphenylsulfone component alone and have improved unnotched Izod impact values over that of the polyetherimide component alone. In addition, blends of the polyetherimide and this polysulfone appear to be completely compatible over the entire blending composition range as evidenced by a single glass transition temperature for each blend and by the blends being transparent.

More specifically, the notched Izod values for the blends remain fairly constant from 99% to 30% polyetherimide and below the 30% level, the notched Izod increases rather sharply and approaches the value for the polyphenylsulfone alone. In contrast, the unnotched Izod value increases from the 99% polyetherimide blend to a maximum extrapolated value of about 70 ft-lb/in for the blend containing about 25% polyetherimide.

The tensile yield elongation is in the range of about 16 to 18% regardless of the blend ratio while the tensile strength at yield increases linearly from pure polysulfone to a 90% polyetherimide blend. The failure strength increases from the 90% polysulfone blend to the pure polyetherimide. Due to some small specks contained in the blends, the failure elongation is less than normally expected as the specimens break during the neckdown period due to the presence of the specks. As to the flexural properties, both the initial modulus and ultimate strength exhibit straight line relationships when plotted versus the composition for the blend.

Example IV

A polyetherimide-polyethersulfone blend according to the invention was prepared, the blend molded into test specimens and the specimens tested for various physical properties.

About 90 parts of the above polyetherimide made in accordance with the procedure of Example II and having the physical properties set forth in Table IV were mixed with 10 parts of a polyethersulfone sold commercially under the trade name VICTREX 200P by Imperial Chemical Industries, Ltd. This polyethersulfone by itself has the physical properties set forth at the bottom of Table IV. The mixture of the two polymers was then extruded in a 28 mm Werner & Pfleiderer extruder having a temperature profile varying from about 610° to 650°F. and a die temperature of about 610°F. The resulting extrudate was comminuted into pellets and the pellets injection molded at about 650°F. into test specimens. Impact strengths of these specimens was measured according to the standard unnotched and notched Izod test and the results are set forth in Table IV. The heat distortion temperature, Gardner impact strength, flexural properites and tensile properties of the blend were also measured and are given in Table IV.

The above procedure in forming a polyetherimide-polyethersulfone blend according to the invention was then repeated to produce test specimens of a series of blends containing varying amounts of polyetherimide relative to the amount of polyethersulfone. The test specimens of the blend containing about 70% polyetherimide were produced under the same conditions as above while the test specimens of the blends containing about 50, 30 and 10% polyetherimide were extruded at about 640° to 670°F with a die temperature of about 675°F and molded at about 600°F. The results of the unnotched and notched Izod impact test, as well as the heat distortion temperature, Gardner impact strength, flexural properties, and tensile properites for test specimens of the blends are also detailed in Table IV.

Table IV

| % Polyetherimide | Izod Impact[1] (ft-lb/in) notched | Izod Impact[1] (ft-lb/in) unnotched | Heat Distortion Temperature (°C @ 264 psi) | Gardner Impact[2] (in-lbs) | Flexural Properties: Initial Modulus (psix$10^5$) | Flexural Properties: Stress @ 5% Strain (psix$10^4$) | Flexural Properties: Ultimate Strength (psix$10^4$) | Tensile Properties: Yield (%) | Tensile Properties: Yield (psix$10^4$) | Tensile Properties: Failure (%) | Tensile Properties: Failure (psix$10^4$) |
|---|---|---|---|---|---|---|---|---|---|---|---|
| 100 | 1.1 | 26.5 | 186 | 115 | 5.02 | 2.10 | 2.51 | 18 | 1.54( | 6 | 1.25 |
| 90 | 0.6 | ---- | 188 | 114 | 5.00 | 2.03 | 2.45 | 16 | 1.45 | 30 | 1.24 |
| 70 | 0.6 | NB* | 186 | 93 | 4.75 | 1.95 | 2.32 | 15 | 1.40 | 32 | 1.10 |
| 50 | 1.5 | NB | 188 | 169 | 4.60 | 1.94 | 2.28 | 15 | 1.38 | 85 | 1.09 |
| 30 | 1.3 | NB | 183 | 258 | 4.39 | 1.93 | 2.19 | 15 | 1.27 | 66 | 0.956 |
| 10 | 1.2 | NB | 181 | >320 | 4.65 | 2.25 | 1.96 | -- | ---- | 12 | 1.23 |
| 0 | 1.3 | NB | 191 | >320 | 4.01 | 1.60 | 1.77 | 14 | 1.22 | 65 | 0.869 |

*no break
1. 0.125 in bar
2. 0.128 in. plaque and 0.625 tip
3. Not measured in absolute values and are higher than normal by factor of about 2.

All of the blends produced were transparent with the exception of the blends containing 30 and 50% polyetherimide which were translucent.

As is apparent from the above test results, the polyetherimide and the polyethersulfone components are generally compatible and produce blends of satisfactory physical characteristics over the entire blending composition range. More specifically, the notched Izod impact strength for the blends is at a maximum at a 50:50 blend ratio while the unnotched Izod samples exhibit no breaks below a 70% polyetherimide concentration. The polyetherimide polyethersulfone blends have slightly lower tensile strengths and flexural modulus as compared with the polyetherimide component alone. The Gardner impact strength of the blends is directly proportional to polyethersulfone concentration with a Gardner impact strength in excess of 320 in-lb being attained with a blend containing about 90% polyethersulfone. The tensile strengths exhibit a small but steady decrease in both the yield and failure values as the polyethersulfone concentration of the blend increases. The failure elongation for the blends has a maximum value at 50:50 concentration ratio and the initial flexural modulus decreases with increasing polyethersulfone content in the blend while the strength at 5% strain remains fairly constant regardless of the proportion of the blend components.

Substitution of other polyetherimides and/or other polysulfones for the polyetherimides and/or polysulfones blends of the above examples results in the formulation of polyetherimide-polysulfone polymer blends having similar characteristics such as improved impact strengths as compared with the polyetherimide component alone and such blends are considered within the scope of the present invention.

While the present invention has been described with reference to particular embodiments thereof, it will be understood that numerous modifications may be made by those skilled in the art without actually departing from the spirit and scope of the invention as defined in the appended claims.

WE CLAIM

1. A composition comprising a blend of (a) a polysulfone and (b) a polyetherimide.

2. A composition in accordance with claim 1 wherein the polysulfone is of the formula:

$$-(A-SO_2-A-B)_b-$$

where A and B are aryl nucleus; or B is either a single bond or $-SO_2-$; and b is a positive integer in excess of 5.

3. A composition in accordance with claim 2 wherein A and B are selected from:

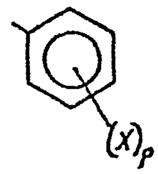 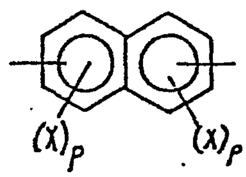 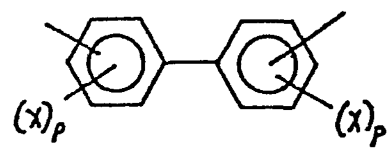

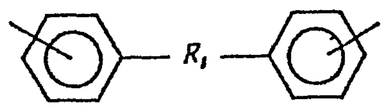 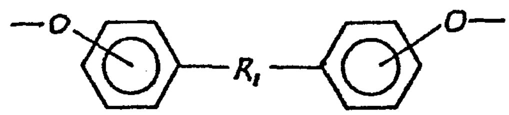

where $R_1$ is a $C_1$-$C_{12}$ alkylene; $C_2$-$C_{12}$-alkylidene; $C_5$-$C_{12}$-cycloalkylene; $C_5$-$C_{12}$cycloalkylidene; $C_7$-$C_{12}$aralkylene; $C_7$-$C_{12}$-aralkylidene; or a $C_8$-$C_{12}$-arylene-bis-alkylidene radical, one of the groupings -O-, -S-, -SO-, or -CO- or

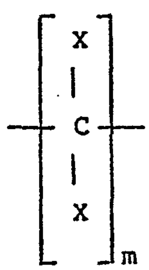 or 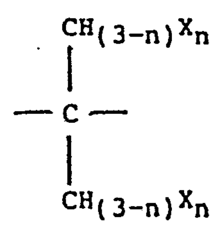

where p is 0 or an integer from 1 to 4, X is halogen, m is a positive integer from 1 to 6 and n is an integer from 1 to 3 or B is a single bond or $-SO_2-$.

4. A composition in accordance with claim 3 wherein the polysulfone has the structural formula

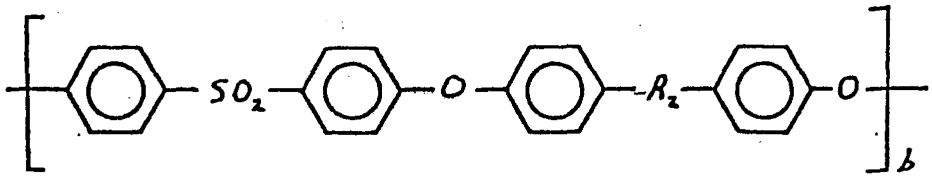

where $R_2$ is $C_1$-$C_6$ alkylene.

5. A composition in accordance with claim 4 wherein $R_2$ is dimethyl methylene.

6. A composition in accordance with claim 3 wherein the polysulfone has the structural formula:

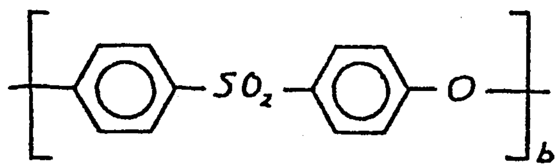

7. A composition in accordance with claim 3 wherien the polysulfone has the structural formula:

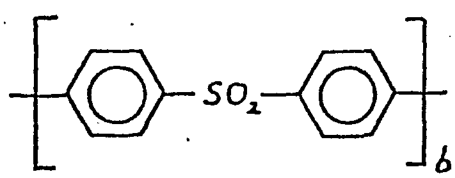

8. A composition in accordance with claims 1,2,3,4, 5,6 or 7 wherein the polyetherimide has the formula;

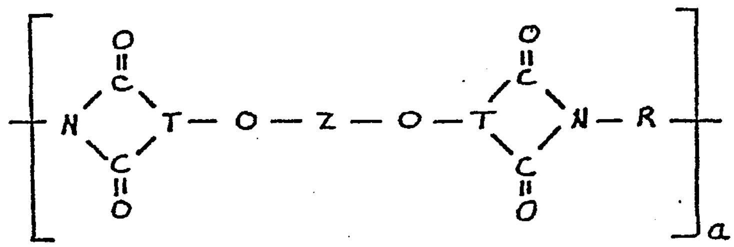

where a represents a whole number in excess of 1, the group $-O-T<$ is selected from:

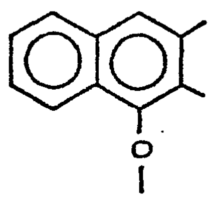

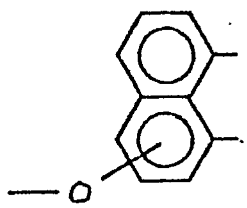

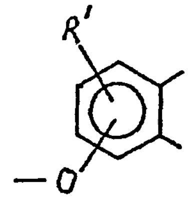

R' being hydrogen, lower alkyl or lower alkoxy, Z is a member selected from the class consisting of (1)

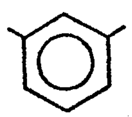

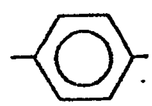

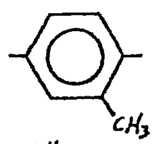

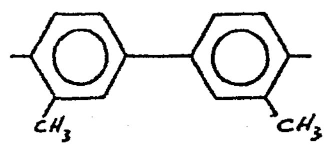

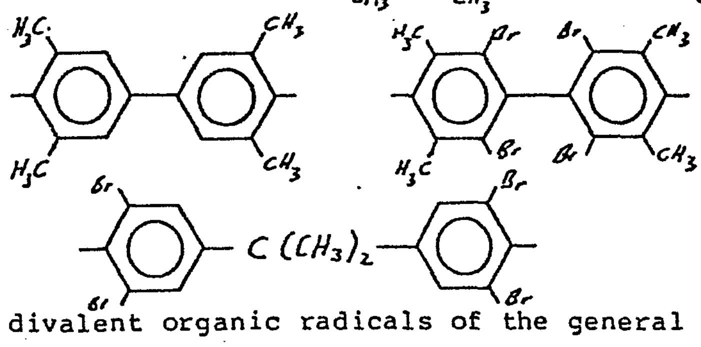

And (2) divalent organic radicals of the general formula:

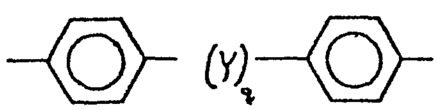

where Y is a member selected from the class consisting of divalent radicals of the formulas,

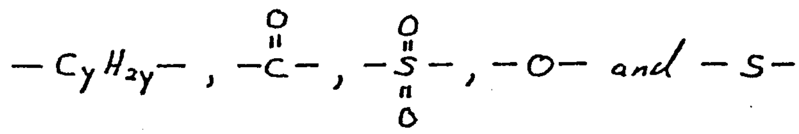

where q is 0 or 1, y is a whole number from 1 to 5, and R is a divalent organic radical selected from the class consisting of (1) aromatic hydrocarbon radicals having from 6-20 carbon atoms and halogenated derivatives thereof, (2) alkylene radicals and cycloalkylene radicals having from 2020 carbon atoms, $C_{(2-8)}$ alkylene terminated polydiorganosiloxane, and (3) divalent radicals included by the formula

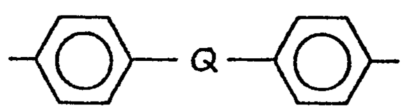

where Q is a member selected from the class consisting of

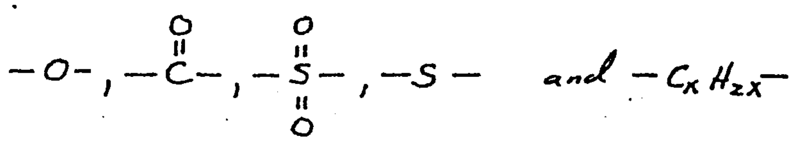

where x is a whole number from 1 to 5 inclusive.

9. A composition in accordance with claim 8 wherein the polyetherimide is of the formula;

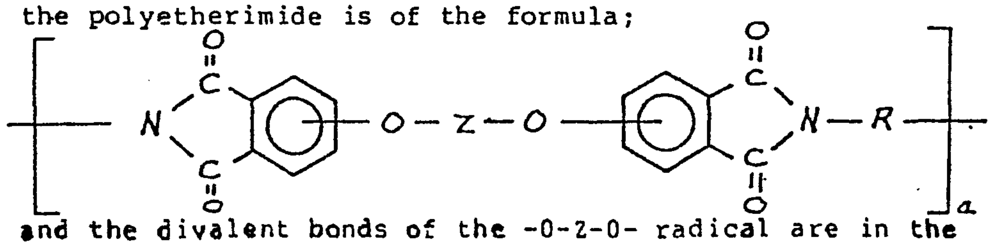

and the divalent bonds of the -O-Z-O- radical are in the 3,3'; 3,4'; 4,3' or the 4,4' position.

10. A composition in accordance with claim 9 wherein Z is;

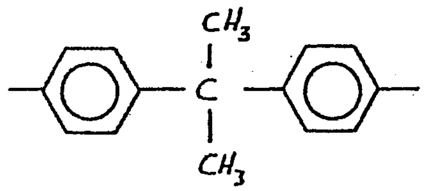

and R is selected from;

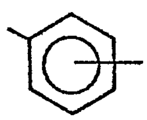

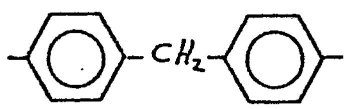

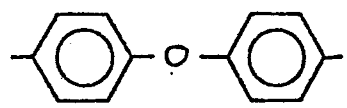

11. A composition in accordance with claim 10 wherein the polyetherimide is of the formula:

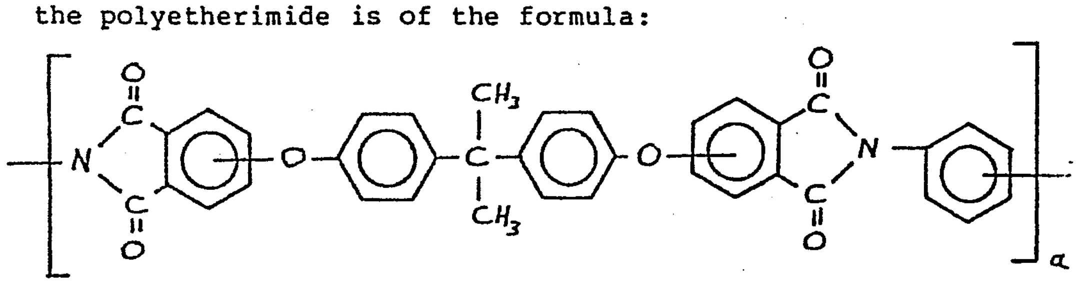

12. A composition in accordance with claim 1 wherein the polysulfone has the structural formula:

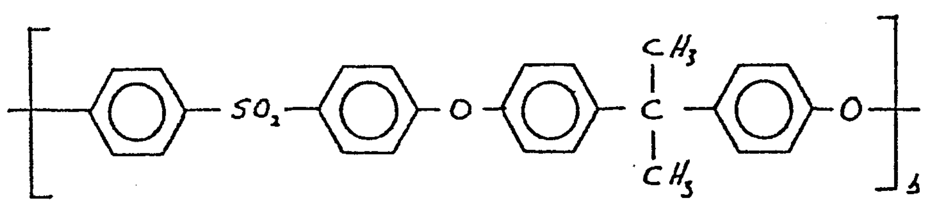

European Patent Office

# EUROPEAN SEARCH REPORT

0091117
Application number

EP 83 10 3299

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | EP-A-0 033 394 (UNION CARBIDE)<br>* Claims 1,3 *<br>--- | 1 | C 08 L 79/08<br>C 08 L 81/06 |
| A | GB-A-2 039 931 (TORAY)<br>--- | | |
| A | US-A-3 658 938 (G.T. KWIATKOWSKI)<br>----- | | |

TECHNICAL FIELDS SEARCHED (Int. Cl. 3)

C 08 L 79
C 08 L 81

The present search report has been drawn up for all claims

| Place of search | Date of completion of the search | Examiner |
|---|---|---|
| THE HAGUE | 27-06-1983 | LEROY ALAIN |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons

& : member of the same patent family, corresponding document